# EUROPÄISCHE PATENTSCHRIFT

(11) **EP 3 658 351 B1**
(45) Veröffentlichungstag und Bekanntmachung des Hinweises auf die Patenterteilung: **08.09.2021**
(21) Anmeldenummer: 18738368.2
(22) Anmeldetag: 18.07.2018
(51) Int. Cl.: B29C 64/106, B29C 64/209, B29C 64/295, B33Y 30/00

(54) **EIN 3D-DRUCKKOPF ZUM EINSATZ IN EINEM 3D-DRUCKER, EIN 3D-DRUCKER MIT EINEM SOLCHEN 3D-DRUCKKOPF UND VERFAHREN ZUM BETREIBEN EINES SOLCHEN 3D-DRUCKERS.**
3D PRINT HEAD FOR USE IN A 3D PRINTER, 3D PRINTER HAVING SUCH A 3D PRINT HEAD AND METHOD FOR OPERATING SUCH A 3D PRINTER.
TÊTE D'IMPRESSION 3D DESTINÉE À ÊTRE UTILISÉE DANS UNE IMPRIMANTE 3D, IMPRIMANTE 3D COMPRENANT CETTE TÊTE D'IMPRESSION 3D ET PROCÉDÉ POUR FAIRE FONCTIONNER CETTE IMPRIMANTE 3D.

(30) Priorität: 27.07.2017 IT 201700086211
(43) Veröffentlichungstag der Anmeldung: 03.06.2020
(73) Patentinhaber: Starfort KG des Stubenruss Moritz, 39042 Bressanone (IT)
(72) Erfinder: STUBENRUSS, Moritz, 39042 Bressanone (IT)
(74) Vertreter: Schmidt, Steffen J.
(86) Internationale Anmeldenummer: PCT/EP2018/069500
(87) Internationale Veröffentlichungsnummer: WO 2019/020454

(56) Entgegenhaltungen:
- WO-A1-2016/004642
- US-A1- 2017 182 701

## Beschreibung

### Hintergrund

Hier werden ein 3D-Drucker, ein 3D-Druckkopf zum Einsatz in einem solchen 3D-Drucker, ein Verfahren zum Betreiben eines solchen 3D-Druckers, und ein mit einem solchen 3D-Drucker hergestelltes Druckerzeugnis offenbart. Details hierzu sind in den Ansprüchen definiert; aber auch die Beschreibung und die Zeichnung enthalten relevante Angaben zur Struktur und zur Funktionsweise sowie zu Varianten des Verfahrens und den Vorrichtungskomponenten.

### Stand der Technik

Die WO 2016 020150 A1 (Stubenruss) betrifft eine Granulatkörner-/ Flüssigkeitsflusseinstellvorrichtung für von Granulatkörnern und/oder Flüssigkeiten gespeiste 3D-Druckerköpfe. Dieses System liefert bei einem hohen Materialaustrag (Volumen des Druckmaterials pro Zeiteinheit) hochqualitative Druckerzeugnisse aus unterschiedlichen Materialien und Zuschlagstoffen mit sehr hoher Präzision und gleichmäßiger Schichtdicke. Dazu hat der dort offenbarte 3D-Druckerkopf eine Kammer mit einer (Boden-)Fläche, in der eine Austrittsöffnung vorgesehen ist. In der Kammer befindet sich eine Spiralförderschnecke, die das Druckmaterial der Austrittsöffnung zuführt. Ein Krafterzeuger drängt die Spiralförderschnecke in Richtung der Fläche, wobei der Abstand zwischen der Spiralförderschnecke und der Fläche durch den Druck des zuzuführenden Druckmaterials einstellbar ist.

Die relative Drehgeschwindigkeit zwischen der Fläche und der Spiralförderschnecke ist in Abhängigkeit von dem Druck des Druckmaterials einstellbar. Diese Anordnung leitet Granulatkörner oder Flüssigkeiten durch einen Zufuhrkanal in die Kammer mit der die Austrittsöffnung aufweisenden Platte. Durch die Austrittsöffnung kann aus dem Granulat oder den Flüssigkeiten erhaltenes, geschmolzenes oder flüssiges Druckmaterial austreten. Das Druckmaterial wird in Richtung der Kammer-Austrittsöffnung geleitet, oder das Druckmaterial wird wieder in eine von der Austrittsöffnung abgewandte Richtung durch Rotieren der Spiralförderschnecke relativ zu der Platte gebracht, wobei bei zu großem Druck des Druckmaterials sich die Spiralförderschnecke gegen die einwirkende axiale Kraft erhebt und die Wirksamkeit der Spiralförderschnecke abnimmt.

Beim Schmelzschichtungs-Druckverfahren wird flüssiges oder (durch Wärme) verflüssigtes Kunststoffmaterial aus einer Düse auf ein bereits vorhandenes, vorher ausgebrachtes Kunststoffmaterial aufgebracht um ein Bauteil oder Werkstück additiv aufzubauen. Dabei darf das bereits vorhandene Kunststoffmaterial nicht so heiß sein, dass es nennenswert verläuft und dabei seine Form verliert, während das neu aufzubringende Kunststoffmaterial nicht so heiß sein darf, dass es chemisch zerfällt oder seine gewünschten physikalischen Eigenschaften nach dem Erkalten nicht (mehr) erreicht. Der Temperaturunterschied zwischen dem bereits ausgebrachten Kunststoffmaterial und dem neu aufzubringenden Kunststoffmaterial an der Grenzschicht zwischen ihnen reicht oft nicht, aus, um deren innige und gleichmäßige Verschweißung sicher zu stellen. Nachteilig ist hierbei die für manche Zwecke unzureichende Festigkeit des Werkstücks/Bauteils, insbesondere durch gegebenenfalls auftretende Lufteinschlüsse im aufgetragenen Kunststoffmaterial an der Grenzschicht zum bereits vorhandenen Kunststoffmaterial des Werkstücks. WO 2016/004642 A1 (CLOUD COMPUTING CT CHINESE ACADEMY OF SCIENCES [CN] 14. Januar 2016 (2016-01-14); & US 2018/079139 A1 (WANG FEIYUE [CN] ET AL) 22. März 2018 (2018-03-22) offenbart einen 3D-Druckerkopf zum additiven Aufbauen eines Bauteils, mit einer Kammer, die dazu eingerichtet ist, durch einen Einlass flüssiges oder festes Druckmaterial zu erhalten, wobei - die Kammer einen Auslass aufweist, vorgesehen und eingerichtet zum Auftragen von flüssigem oder verflüssigtem Druckmaterial auf eine Fläche, wobei der Auslass einen rotations-asymmetrischen Durchtrittsquerschnitt für das Druckmaterial hat und Teil einer an der Kammer um eine Mittellängsachse drehbar angeordneten Düse ist. Das Dokument US-A-20170182701 offenbart einen 3D-Druckerkopf nach dem Oberbegriff des Anspruchs 1.

### Zugrundeliegende Aufgabe

Ein 3D-Druckerkopf soll ein additives Druckerzeugnis mit hoher Qualität und Festigkeit erzeugen.

### Vorgestellte Lösung

Dazu ist der 3D-Druckerkopf / der 3D-Drucker mit der hier offenbarten und im Patentanspruch 1 definierten Funktion und Struktur ausgestattet.

Dieser 3D-Druckerkopf ist dazu eingerichtet, granularen, pulvrigen oder flüssigen Kunststoff oder Komponenten zwei- oder mehrteiliger Kunststoffsysteme (Thermoplaste, Epoxide, Acrylate, Polyactide, Acrylester-Styrol-Acrylnitril, Polymethylmethacrylat, Polyethylen (PE), Polyvinylchlorid (PVC), Polyethylenterephthalat (PET) oder Glykol-modifiziertes Polyethylenterephthalat (PETG), Polyethylennaphthalat (PEN), Acrylnitril-Butadien-Styrol-Copolymerisat (ABS), Polyvinylbutyral (PVB), Polymethylmethacrylat (PMMA), Polyamid (PA), Polyimid (PI), Polyvinylalkohol (PVA), Polystyrol (PS), Polyvinylphenol (PVP), Polypropylen (PP), Polycarbonat (PC) oder deren Derivate, etc.), aber auch niedrigschmelzende Metalle oder Metall-Legierungen (Zinn, Blei, Gallium, Aluminium Aluminium, Zink, Cadmium) als Druckmaterial zu verarbeiten. Es ist auch möglich, flüssige, auf Licht oder Wärme reagierende Kunststoffe mit dem hier offenbarten Druckkopf auszugeben und durch eine dem Druckkopf zugeordnete Licht- oder Wärmequelle sofort auszuhärten. In dem hier offenbarten 3D-Drucker können dem Druckmedium zur Beeinflusssung der Materialeigenschaften (Dichte [g/cm³], E-Modul [MPa], Bruchdehnung [%], Zugfestigkeit [MPa], Schmelzpunkt [°C], etc.) Zuschlagstoffe wie Partikel, Späne oder Fasern aus Textil- oder Mineralmaterial, Glas, Kohle, Metall oder dergl. beigegeben werden. Die Begriffe "Druckmaterial", "Kunststoff", "Kunststoffmaterial" sind hier synonym, also auch für Metalle oder Metall-Legierungen etc. verwendet.

Der 3D-Druckerkopf des 3D-Druckers hat eine Kammer, der das zu verarbeitende Material (gesteuert/geregelt) zugeführt wird. Die Kammer des 3D-Druckerkopfes hat einen Auslass. Der Auslass ist an einer Seite des 3D-Druckerkopfes angeordnet, die einer das aufzubauende Bauteil tragenden Fläche zugewandt ist und dient zum Auslass des Kunststoffmaterials aus dem 3D-Druckerkopf. Für die Verarbeitung thermoplastischen Kunststoffmaterials umfasst der 3D-Druckerkopf eine auf die Schmelztemperatur des Kunststoffmaterials (gesteuert/geregelt) erwärmbare Kammer.

Der 3D-Druckerkopf ist zum Auftragen eines erwärmten und dadurch verflüssigten Werkstoffes vorgesehen. Der 3D-Druckerkopf kann mit Hilfe eines gesteuerten Antriebs relativ zu der Fläche im Abstand zu dieser Fläche geführt werden. Aus dem Auslass der Kammer strömt, (gesteuert / geregelt) zumindest zeitweise, verflüssigtes Kunststoffmaterial auf die Fläche. Dies kann geschehen, während der 3D-Druckerkopf relativ zu der Fläche im Abstand zu dieser geführt wird.

Durch den Kontakt mit der Fläche erhöht das aufgebrachte Kunststoffmaterial nach kurzer Zeit seine Festigkeit indem es abkühlt / erstarrt. Das auf die Fläche aufgetragene Kunststoffmaterial verbindet sich, zumindest bereichsweise, mit der Fläche. Eine Erwärmung der Fläche vor/ während/ nach dem Auftragen des Kunststoffmaterials verbessert maßgeblich die Verbindung des aufgetragenen Kunststoffmaterials mit der Fläche.

Unter einer Fläche ist hier ein Bereich des Untergrundes für das Bauteil und/oder einer Oberfläche des Bauteils verstanden, welcher zumindest bereichsweise mit dem neuen Kunststoffmaterial beaufschlagt wird. Auf die Fläche wird das Kunststoffmaterial mit Hilfe des 3D-Druckerkopfes aufgebracht. Zu Beginn der Herstellung des Bauteils ist die Fläche eine (ggf. beheizte) Unterlage aus Metall, Kunststoff oder Glas. Wenn der 3D-Druckerkopf bereits eine oder mehrere Lagen oder Bahnen des Kunststoffmaterials auf die Fläche aufgebracht hat, bilden diese die zumindest stellenweise beheizte und/oder gekühlte Fläche. So kann die Fläche der Bereich der Unterlage sein, der mit Hilfe des 3D-Druckerkopfes mit dem Kunststoffmaterial beaufschlagt wird, wobei eine erste Lage des Kunststoffmaterials auf der Unterlage aufgetragen wird und die weiteren Lagen des Kunststoffmaterials auf das sich aufbauende Bauteil.

### Ausgestaltungen und Varianten

Um eine hochwertige Verschweißung zu erreichen, wird in dem Verschweißungsbereich des zu druckenden Bauteils zusätzliche Wärme zugeführt. Dieser zusätzliche Wärmeeintrag kann Strahlungswärme sein, zum Beispiel in Form von Laser- oder Infrarot-Licht. Der Wärmeeintrag kann auch mittels einer zu bestromenden Heizwendel als Strahlungswärme bereitgestellt werden. Alternativ oder Zusätzlich kann auch eine gerichtete Heißgasquelle temperiertes Gas (z.B. Luft oder Schutzgas) auf die Fläche strömen lassen.

Dabei wird in einer Variante die Fläche derart erwärmt, so dass das Kunststoffmaterial des bereits ausgebrachten Kunststoffmaterials welches zumindest teilweise die Fläche bildet, an seiner Oberfläche erweicht. Beim Auftragen des geschmolzenen neu aufzubringenden Kunststoffmaterial mit Hilfe des 3D-Druckerkopfes ist so eine verbesserte Verbindung / Vermischung / Durchdringung der (verflüssigten / geschmolzenen / erweichten) Kunststoffmaterialien untereinander möglich.

Nach dem Auftragen kann das aufgetragene Kunststoffmaterial zusammen mit dem bereits ausgebrachten Kunststoffmaterials in einer Variante mit Hilfe eines Kühlers, auch auf eine definierte Temperatur, abgekühlt werden. Mit dem Kühler werden das bereits ausgebrachte Kunststoffmaterial und das neu aufgebrachte Kunststoffmaterial auf eine vorbestimmte Temperatur eingestellt.

Da insbesondere thermoplastische Kunststoffe relativ schlechte Wärmeleiter sind, kann die Temperatur bei einem zu druckenden Bauteil während des Druckvorgangs an verschiedenen Stellen sehr unterschiedlich sein. Je nach dem gewählten Verfahrweg des Druckerkopfes entlang der Kontur des zu druckenden Bauteils kann in manchen Bereichen des Bauteils die Temperatur kurzzeitig sehr hoch liegen. Eine Möglichkeit der Vergleichmäßigung des Temperaturprofils des Bauteils liegt in der temperaturabhängigen Routenplanung des Druckerkopfes. Dies ist allerdings sehr aufwendig und erfordert sehr viele Testläufe und/oder Simulationsaufwand, was zumindest bei Kleinserien nicht effizient ist.

Der Wärmeeintrag in die Fläche / das Bauteil kann vor und/oder nach dem neu aufzubringenden Kunststoffmaterial erfolgen. Alternativ kann der Wärmeeintrag auch von schräg oben seitlich zu der Druckerdüse / dem Auslass des Druckerkopfes erfolgen. Der Wärmeeintrag ist in einer Variante so zu bemessen, dass im Bereich des Aufeinandertreffens des bereits ausgebrachten Kunststoffmaterials mit dem neu aufzubringenden Kunststoffmaterial kurzzeitig zumindest weich oder flüssig ist. Unter "kurzzeitig" ist hierbei ein Zeitraum von etwa 0.2 - 2 Sekunden zu verstehen, wobei dieser Zeitraum von der spezifischen Wärmekapazität des Kunststoffmaterials, von der Breite und der Höhe des neu aufzubringenden Kunststoffmaterials, und von der Verfahrgeschwindigkeit des 3D-Druckerkopfes abhängt. Abhängig von einer Verfahrgeschwindigkeit des 3D-Druckerkopfes relativ zu der Fläche / dem Bauteil ist der Wärmeeintrag in einer Variante so zu bemessen, dass jeweils ein Bereich von etwa 2 - 5 mm in der Umgebung des Auslasses des 3D-Druckerkopfes erweicht / verflüssigt ist. Abhängig von einer Durchtrittsfläche des Auslasses des 3D-Druckerkopfes und dessen Abstandes von der Fläche / dem Bauteil ist der Wärmeeintrag in einer Variante so zu bemessen, dass jeweils ein Bereich von etwa dem 2 - 10-fachen der Durchtrittsfläche des Auslasses aus in der Umgebung des Auslasses des 3D-Druckerkopfes erweicht / verflüssigt ist. Unter "in der Umgebung des Auslasses" ist bei diesen beiden Varianten ein kreisförmiger, kreissektorförmiger, ovaler, oder streifenförmiger Bereich der Fläche verstanden, der sich unter dem Auslass befindet oder von diesem radial ausgeht.

In einer Variante erfolgt ein Wärmeeintrag nur in dem Bereich, der gerade von der Druckerdüse des 3D-Druckerkopfes überfahren wird. Unter "gerade überfahren" ist dabei sowohl verstanden, dass die 3D-Druckerdüse / Auslass kurz vorher (0.2 - 2 Sekunden) den Bereich überstrichen hat, oder die 3D-Druckerdüse / Auslass den Bereich in Kürze (0.2 - 2 Sekunden) überstreichen wird.

Unter Wärmeeintrag ist hier eine Veränderung der Temperatur des Bereichs der Fläche verstanden, in dem das Kunststoffmaterial auf die Fläche trifft, und zwar bevor oder nachdem das Kunststoffmaterial den 3D-Druckerkopf verlassen hat. Erwärmt wird insbesondere Bereich der Fläche, den der 3D-Druckerkopf in Kürze überstreichen wird.

Um zu vermeiden, dass die zusätzliche Wärme zur Überhitzung des Kunststoffs führt und dieser chemisch zerfällt, wird in einer Variante die Temperatur des Druckteiles - vor und/oder nach dem neu aufzubringenden Kunststoffmaterial - im Verschweißungsbereich gemessen. Dies kann zum Beispiel mittels eines Infrarotsensors, einer Wärmebildkamera oder einer sonstigen berührenden oder berührungslosen Temperatursonde geschehen. Abhängig vom Messergebnis wird durch die Steuerung der Wärmeeintrag geregelt, um die Qualität der Verschweißung zu optimieren.

Die Fläche und das Kunststoffmaterial haften nach dessen Auftragen aneinander. Durch das Erwärmen wird das Kunststoffmaterial der Fläche an seiner Oberfläche erweicht/geschmolzen. Das ebenfalls geschmolzene Kunststoffmaterial verbindet sich dann mit dem Material der Fläche deutlich besser, da bei einem erwärmten/geschmolzenen Untergrund die Oberflächenspannung des diesen Untergrund bildenden geschmolzenen Werkstoffs verringert ist. Hieraus ergibt sich eine verbesserte Durchdringung der Kunststoffmaterialien in der Grenzschicht und daraus resultierende Haftung des aufgebrachten Kunststoffmaterials.

Da der Verfahrweg des 3D-Druckerkopfes der Kontur des aufzubauenden Bauteils entsprechend Kurven oder Knicke umfassen kann, ist die Wärmequelle / Kühlquelle entsprechend dem Verfahrweg des 3D-Druckerkopfes mitzuführen. Hierfür bietet sich in einer Variante ein Gebläse für warme / kalte Luft an. Die Wärmequelle / Kühlquelle ist dazu geeignet und eingerichtet, eine vorgegebene Fläche / ein die Fläche bildendes Kunststoffmaterial bereichsweise zu kühlen oder erwärmen. Dabei kann auch eine Wärmequelle auf einen dem Auslass auf dem Verfahrweg des 3D-Druckerkopfes vorauseilenden Bereich der Fläche gerichtet sein, und eine Kühlquelle auf einen dem Auslass auf dem Verfahrweg des 3D-Druckerkopfes nacheilenden Bereich der Fläche gerichtet sein. Sowohl die Wärmequelle als auch die Kühlquelle können die Fläche berührend oder berührungslos erwärmen/kühlen. Als besonders adaptierbare Wärmequelle / Kühlquelle ist in einer Variante ein Peltierelement vorgesehen, das von der Fläche mit dem neu aufgetragenen Kunststoffmaterial aufgenommene Wärme zum Beispiel an eine wärmeleitende Flüssigkeit abgeben kann. Das nachträgliche Kühlen der Fläche und/oder des aufgetragenen Kunststoffmaterials mit Hilfe der Kühlquelle verbessert die Maßhaltigkeit des resultierenden Bauteils, da das aufgetragene Kunststoffmaterials rasch erhärtet und seine gewünschte Gestalt nicht verliert.

Als weitere Lösung des oben genannten Problems wird ein 3D-Drucker vorgeschlagen, umfassend einen 3D-Druckerkopf mit einem oder mehreren der vorhergehenden Merkmale, der relativ zu einer Aufnahme für ein Druckerzeugnis entlang wenigstens einer geometrischen Achse zu bewegen ist, wobei dem 3D-Drucker eine Steuerung zugeordnet ist, die dazu eingerichtet ist, mittels wenigstens einem Achsantrieb den 3D-Druckerkopf relativ zu der Aufnahme zu bewegen. Alternativ oder zusätzlich ist ein Antrieb für die Spiralförderschnecke relativ zu der Kammer vorgesehen um Druckmaterial aus der Austrittsöffnung kontrolliert auf die Aufnahme auszubringen.

Als weitere Lösung des oben genannten Problems wird ein Verfahren zum Betreiben eines 3D-Druckers mit einem 3D-Druckerkopf vorgeschlagen, mit folgenden Schritten:
Eintragen von flüssigem oder festem Druckmaterial in eine Kammer durch einen Einlass, und
Austragen von flüssigem oder verflüssigtem Druckmaterial aus der Kammer durch einen Auslass auf eine Fläche,
Eintragen von Wärme in einen Verschweißungsbereich der Fläche in eine Umgebung des Auslasses vor/während/nach dem Auftragen des Druckmaterials.

Dabei kann der Wärmeeintrag relativ zu dem Auslass so erfolgen, dass in dem Verschweißungsbereich der Fläche zusätzliche Wärme zugeführt wird um in dem Verschweißungsbereich die Fläche derart zu erwärmen, dass die Fläche, zumindest an ihrer Oberfläche erweicht und sich mit dem neu aufzutragendem Druckmaterial verbindet, und/oder der Wärmeeintrag kann in die Fläche vor und/oder nach dem neu aufzubringenden Kunststoffmaterial oder von schräg oben seitlich relativ zu dem Auslass erfolgen, und/oder der Wärmeeintrag kann so bemessen sein, dass im Bereich des Aufeinandertreffens des neu aufzubringenden Kunststoffmaterial auf die Fläche diese kurzzeitig zumindest weich oder flüssig wird, oder abhängig von einer Verfahrgeschwindigkeit des 3D-Druckerkopfes relativ zu der Fläche kann der Wärmeeintrag so bemessen sein, dass jeweils ein Bereich von etwa 2 - 5 mm in der Umgebung des Auslasses erweicht / verflüssigt wird, oder abhängig von einer Durchtrittsfläche des Auslasses und dessen Abstandes von der Fläche kann der Wärmeeintrag so bemessen sein, dass jeweils ein Bereich von etwa dem 2 - 10-fachen der Durchtrittsfläche des Auslasses aus in der Umgebung des Auslasses erweicht / verflüssigt wird, oder der Wärmeeintrag kann nur in dem Bereich erfolgen, der momentan von dem Auslass überfahren wird.

Schließlich wird ein Druckerzeugnis oder Bauteil offenbart, erhältlich mittels des vorstehenden Verfahrens, und/oder mit einer vorstehenden Vorrichtung. Ein solches Druckerzeugnis oder Bauteil ist von einem herkömmlich erzeugten Druckerzeugnis oder Bauteil unterscheidbar, weil durch das Eintragen von Wärme in den Verschweißungsbereich der Fläche in einer Umgebung des Auslasses vor/während/nach dem Auftragen des Druckmaterials im Grenzbereich zwischen dem bereits vorhandenen Druckmaterial der Fläche und dem aufgebrachten Druckmaterial die Materialien sich durchdringen. In einem herkömmlich erzeugten Druckerzeugnis oder Bauteil ist in einem Schnitt durch das Bauteil die Grenzfläche zwischen bereits vorhandenem Druckmaterial und dem neu aufgebrachten Druckmaterial deutlich erkennbar.

Als weitere Lösung des oben genannten Problems wird ein 3D-Druckerzeugnis vorgeschlagen, erhältlich mittels eines 3D-Druckers aufweisend einen 3D-Druckerkopf mit einem oder mehreren vorhergehenden Vorrichtungsaspekte und/oder mittels eines Verfahrens mit einem oder mehreren der vorhergehenden Verfahrensaspekte.

Es sei bemerkt, dass obwohl hier numerische Bereiche und numerische Werte offenbart sind, alle numerischen Werte zwischen den offenbarten Werten und jedem numerischen Unterbereich innerhalb der genannten Bereiche als ebenfalls offenbart anzusehen sind. Es sei ferner darauf hingewiesen, dass während eine Zahl für ein Verhältnis zwischen den verschiedenen Abmessungen der hier beschriebenen Komponenten angegeben ist, dass jede spezielle Komponenten der hier beschriebenen Art nicht notwendigerweise jedes und alle Verhältnisse zwischen den verschiedenen hier angegebenen Abmessungen verwirklichen muss.

### Kurzbeschreibung der Zeichnung

Weitere Ziele, Merkmale, Vorteile und Anwendungsmöglichkeiten ergeben sich aus der nachfolgenden Beschreibung einiger Ausführungsbeispiele und zugehöriger Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen.

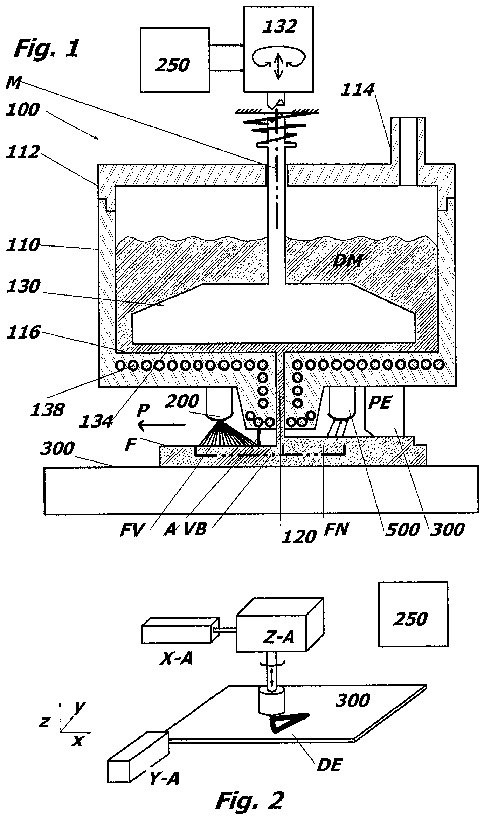

Fig. 1 veranschaulicht eine schematische seitliche Schnittansicht durch einen 3D-Druckerkopf, der eine Variante der hier vorgestellten Lösung verkörpert.

### Detaillierte Beschreibung der Zeichnung

Ein in Fig. 1 veranschaulichter 3D-Druckerkopf 100 hat eine topfförmige Kammer 110, die mit einem Deckel 112 zu verschließen ist. Der Deckel 112 hat einen Einlass 114 um flüssiges oder festes Druckmaterial DM der Kammer 110 zuführen zu können. Als Druckmaterial DM für den Druckerkopf 100 können granularer, pulvriger oder flüssiger Kunststoff oder Komponenten zwei- oder mehrteiliger Kunststoffsysteme, aber auch niedrigschmelzende Metalle oder Metall-Legierungen als Kunststoffe eingesetzt werden. Die topfförmige Kammer 110 und der Deckel 112 sind in der veranschaulichten Variante aus Stahl. Es sind aber auch andere Materialien verwendbar. Die Kammer 110 hat an einer Fläche 116 (in Fig. 1 ihrer Bodenfläche) eine als Düse gestaltete Austrittsöffnung 120 für das Druckmaterial DM. Im Innern der Kammer 110 ist eine Spiralförderschnecke 130 angeordnet. Diese Spiralförderschnecke 130 dient dazu, durch den Einlass 114 in die Kammer 110 gelangendes Druckmaterial DM (Kunststoffmaterial) der Austrittsöffnung 120 zuzuführen. Dazu ist in der veranschaulichten Variante die Spiralförderschnecke 130 mit einem Antrieb 132 gekoppelt. Details zu Aufbau und Funktion der Spiralförderschnecke 130 sind der WO 2016 020150 A1 (Stubenruss) zu entnehmen und hier nicht weiter erörtert. Der Antrieb 132 ist - mittels einer Steuerung 250 - dazu eingerichtet, die Spiralförderschnecke 130 relativ zu der Kammer 110 so zu drehen, dass sich die Spiralförderschnecke 130, genauer gesagt ihre untere Stirnseite 134 in Fig. 1, in einem Abstand von der Fläche 116 der Kammer 110 dreht. Dieser Abstand beträgt abhängig von der Art des Druckmaterials DM, dessen Viskosität und dessen etwaigen Zuschlagstoffen nur wenige 100 µm (100 µm - 500 µm) bis wenige (etwa 2 - 5) mm. Um das Druckmaterial DM zu schmelzen und seine Viskosität zu beeinflussen, sofern es als Granulat oder Pulver in die Kammer 110 eingebracht wird, dient eine im Boden der Kammer 110 befindliche Heizwendel 138, deren Heizleistung ebenfalls durch die Steuerung 250 geregelt wird. Hierzu wird in nicht weiter detaillierter Weise die Temperatur des Druckmaterials DM in der Kammer erfasst und der Steuerung 250 signalisiert.

Ein 3D-Drucker mit einem hier vorgestellten 3D-Druckerkopf 100 bewegt diesen, wie in Fig. 2 veranschaulicht, relativ zu einer ebenen Aufnahme 300 für ein Druckerzeugnis DE entlang wenigstens einer geometrischen Achse x, y, z. Dazu hat der 3D-Drucker die Steuerung 250, die mittels jeweiliger Achsantriebe X-A, Y-A, Z-A den 3D-Druckerkopf 100 und die Aufnahme 300 relativ zueinander bewegt und auch den Antrieb 132 für die Spiralförderschnecke 130 in der Kammer 100 betätigt, um Druckmaterial aus der Austrittsöffnung 120 kontrolliert auf die Aufnahme 300 auszubringen. So ist ein 3D-Druckerzeugnis DE erhältlich mittels des 3D-Druckers mit dem 3D-Druckerkopf und in der hier erläuterten Vorgehensweise.

Dem 3D-Druckerkopf 100 ist zusätzlich eine Einrichtung 200 zum Wärmeeintrag zugeordnet um Wärme in einen Verschweißungsbereich VB der Fläche F in einer Umgebung des Auslasses 120 vor dem Auftragen des Druckmaterials DM einzutragen. Diese Einrichtung 200 zum Wärmeeintrag ist in einer Variante zwar dem Druckerkopf zugeordnet, aber von diesem körperlich/ räumlich getrennt. In dieser Variante wird die Einrichtung 200 zum Wärmeeintrag unabhängig von dem 3D-Druckerkopf 100 entlang des Verfahrwegs bewegt oder auf den Verfahrweg in der Umgebung der Austrittsöffnung 120 ausgerichtet um in den Verschweißungsbereich VB einzuwirken. Analoges gilt für die Einrichtung 400 zum Kühlen.

Der Auslass 120 ist an einer Seite des 3D-Druckerkopfes angeordnet ist (in Fig. 1 der Unterseite), die zu einer Fläche F des Bauteils hin gerichtet ist. Dieser Auslass 120 erlaubt den gesteuerten Austritt des Druckmaterials DM aus dem 3D-Druckerkopf. Für die Verarbeitung thermoplastischen Kunststoffmaterials hat die Kammer 110 eine Heizeinrichtung 138 um das thermoplastische Kunststoffmaterial auf seine Schmelztemperatur zu erwärmen.

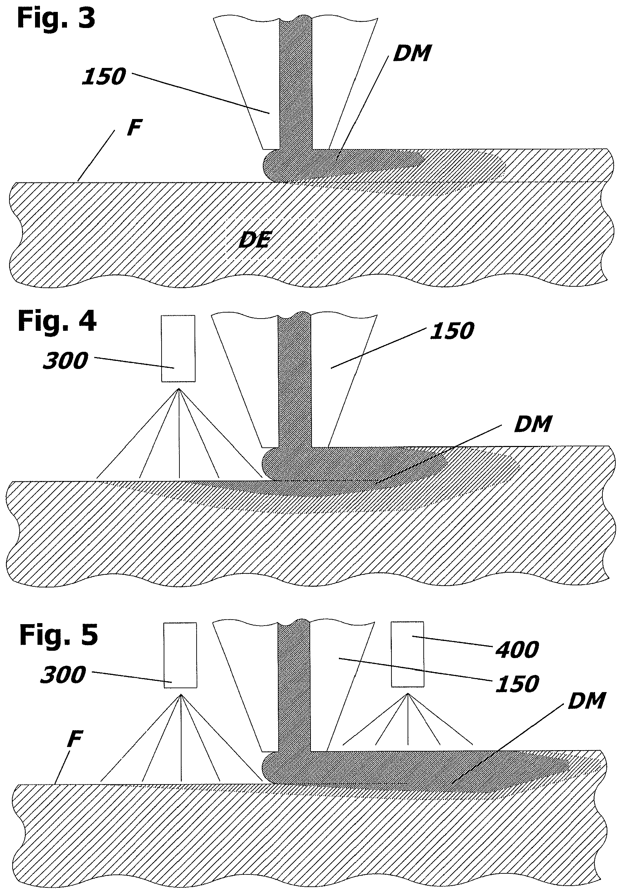

In den Fig. 3 - 5 sind unterschiedliche Varianten gezeigt, wie an dem 3D-Druckerkopf 100 die Einrichtung 200 zum Wärmeeintrag relativ zu dem Auslass 120 angeordnet ist. Ein entscheidender Faktor ist hierbei, dass die Einrichtung 200 zum Wärmeeintrag in dem Verschweißungsbereich VB der Fläche F zusätzliche Wärme zuführt um in dem Verschweißungsbereich VB die Fläche F derart zu erwärmen, dass diese zumindest an ihrer Oberfläche erweicht und sich mit dem neu aufzutragendem Druckmaterial DM verbindet. In den Fig. 3 - 5 repräsentieren dabei unterschiedliche Schraffierungen unterschiedliche Temperaturzonen (Je dunkler die Schraffierung, desto näher ist der so schraffierte Bereich an der Schmelztemperatur des Druckmaterials DM, und je heller die Schraffierung, desto kühler ist der so schraffierte Bereich).

Die Einrichtung 200 zum Wärmeeintrag ist relativ zu dem Auslass 120 so angeordnet, dass der Wärmeeintrag in die Fläche F vor und/oder nach dem neu aufzubringenden Druckmaterial DM oder von schräg oben seitlich relativ zu dem Auslass 120 erfolgt, wie dies in den unterschiedlichen Varianten der Fig. 3 - 5 gezeigt ist. In Fig. 5 kann anstelle der gezeigten Einrichtung 400 zum Kühlen auch eine zweite Einrichtung 200 zum Wärmeeintrag vorgesehen sein, die den Verschmelzungs-/ Verbindungsprozess des neuen mit dem vorhandenen Druckmaterial verlängert und damit intensiviert.

In Fig. 1 ist zusätzlich eine Einrichtung 400 zum Kühlen relativ zu dem Auslass 120 so angeordnet, dass sie das aufgetragene Druckmaterial DM nach dem Auftragen zusammen mit dem bereits ausgebrachten Kunststoffmaterial abkühlt.

Die Einrichtung 200 zum Wärmeeintrag ist durch eine Steuerung 250 so zu steuern, dass der Wärmeeintrag im Bereich des Aufeinandertreffens des neu aufzubringenden Kunststoffmaterial auf die Fläche F diese kurzzeitig zumindest erweicht oder verflüssigt.

Dazu ist abhängig von einer Verfahrgeschwindigkeit des 3D-Druckerkopfes 100 längs der Auftragsrichtung in Richtung des Pfeils P relativ zu der Fläche F der Wärmeeintrag so zu bemessen ist, dass jeweils ein Bereich von etwa 2 - 5 mm in der Umgebung (unterhalb) des Auslasses 120 erweicht / verflüssigt wird. Alternativ kann auch abhängig von einer Durchtrittsfläche des Auslasses 120, also dessen Querschnittsfläche und dessen Abstandes A von der Fläche F der Wärmeeintrag so zu bemessen ist, dass jeweils ein Bereich von etwa dem 2 - 10-fachen der Durchtrittsfläche des Auslasses aus in der Umgebung (unterhalb) des Auslasses 120 erweicht / verflüssigt wird. Der Wärmeeintrag kann auch nur in dem Bereich erfolgen, der momentan von dem Auslass 120 überfahren wird.

Eine Einrichtung 500 zum berührenden oder berührungslosen Erfassen der Temperatur der Fläche F im Bereich der Umgebung des Auslasses 120 ist in der Fig. 1 in der dem Auslass nacheilenden Seite zur Erfassung der Temperatur des neu aufzubringenden Kunststoffmaterials vorgesehen ist.

Sowohl die Einrichtung 200 zum Wärmeeintrag, als auch, sofern vorhanden, die Einrichtung 300 zum Kühlen, also auch, sofern vorhanden, die Einrichtung 500 zum berührenden oder berührungslosen Erfassen der Temperatur der Fläche F sind so der Kammer zugeordnet und mit dieser verbunden, dass sie bei einem Bewegen des 3D-Druckerkopfes relativ zu der Fläche F sich mit diesem bewegen.

In einer Variante (zum Beispiel Fig. 1) ist die Einrichtung 200 zum Wärmeeintrag auf einen dem Auslass 120 auf dem Verfahrweg des 3D-Druckerkopfes vorauseilenden Bereich FV der Fläche F gerichtet, und die Einrichtung 500 zum berührenden oder berührungslosen Erfassen der Temperatur sowie die Einrichtung 300 zum Kühlen auf einen dem Auslass 120 auf dem Verfahrweg des 3D- Druckerkopfes nacheilenden Bereich FN der Fläche F gerichtet.

Die Einrichtung 200 zum Wärmeeintrag und/oder die Einrichtung 300 zum Kühlen sind in einer Variante durch ein oder mehrere Peltierelemente PE realisiert.

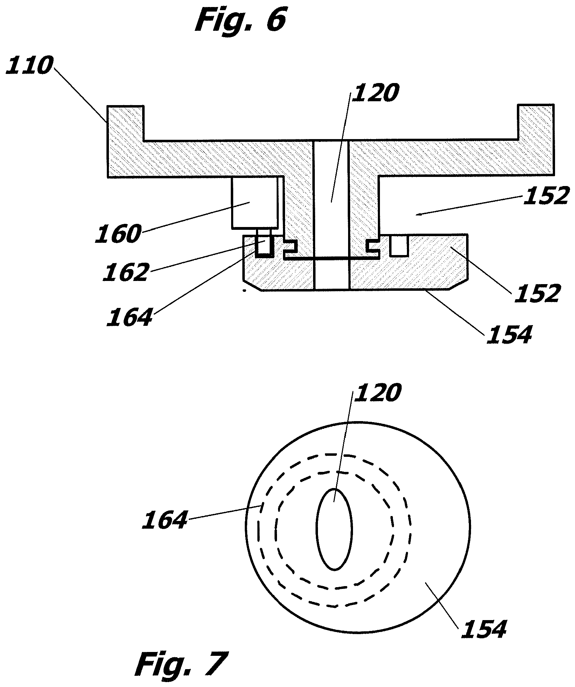

In den Fig. 6 und 7 ist ein 3D-Druckerkopf 100 veranschaulicht, wobei der Auslass 120 einen rotations-asymmetrischen Durchtrittsquerschnitt, hier in ovaler Form, für das Druckmaterial DM hat. Dies erlaubt eine während des Druckvorgangs variable Breite des Streifens ausgebrachten Druckmaterials DM. So kann ein in der Draufsicht flächiger Bereich des Druckerzeugnisses rasch aufgebaut werden, in dem die große Halbachse des ovalen Durchtrittsquerschnitt quer zur Verfahrrichtung des 3D-Druckerkopf 100 ausgerichtet wird. Alternativ dazu kann ein in der Draufsicht schmaler Bereich des Druckerzeugnisses schnell aufgebaut werden, indem die große Halbachse des ovalen Durchtrittsquerschnitt längs zur Verfahrrichtung des 3D-Druckerkopf 100 ausgerichtet wird. Des Weiteren ist in dieser Variante der Auslass 120 Teil einer an der Kammer 110 um eine Mittellängsachse M drehbar angeordneten Düse 150. Die Düse 150 ist in Längsrichtung zweigeteilt, wobei das der Fläche F zugewandte, von der Kammer abliegende Ende drehbar ist. Dieses Ende der Düse 150 hat einen Düsenkörper 152, der eine der Fläche F zugewandte Stirnseite 154 aufweist, die in der gezeigten Variante rotations-asymmetrisch, hier in ovaler Form, zu der Mittellängsachse M gestaltet ist. Dieser Düsenkörper 152 mit seiner asymmetrischen Stirnseite 154 kann in ähnlicher Weise wie die Variante aus Fig. 1 beheizt sein, so dass die vergrößerte Stirnseite 154 auch als Einrichtung 200 zum Wärmeeintrag wirken kann.

Der Düsenkörper 152 mit dem der Fläche F zugewandten Stirnseite 154 ist mittels eines durch die Steuerung 250 betriebenen Motors 160 mit einem Ritzel 162, das mit einem Zahnkranz 164 kämmt, gesteuert um die Mittellängsachse M zu rotieren. Damit kann die Ausrichtung des Auslasses 120 mit seinem rotations-asymmetrischen Durchtrittsquerschnitt verändert und an den Verfahrweg des 3Druckerkopfes angepasst werden.

Die vorangehend beschriebenen Varianten des Verfahrens und der Vorrichtung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen.

Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

### Bezugszeichen

3D-Druckerkopf 100
Kammer 110
Deckel 112
Einlass 114
Druckmaterial DM
Fläche 116
Auslass, Austrittsöffnung 120
Eingang 128
Spiralförderschnecke 130
Antrieb 132
Stirnseite 134
Förderbahn 136
Heizeinrichtung, Heizwendel 138
Steuerung 250
Achsantriebe X-A, Y-A, Z-A
Aufnahme 300
Fläche F des Bauteils
Einrichtung zum Wärmeeintrag 200
Verschweißungsbereich VB
Einrichtung zum Kühlen 400
Pfeil P
Einrichtung zum Erfassen der Temperatur 500
vorauseilender Bereich FV
nacheilender Bereich FN
Düse 150
Düsenkörper 152
Stirnseite 154
Motor 160
Ritzel 162
Zahnkranz 164
Druckmaterial DM
Druckerzeugnis DE

## Patentansprüche

1. Ein 3D-Druckerkopf (100) zum additiven Aufbauen eines Bauteils, mit
- einer Kammer (110), die dazu eingerichtet ist, durch einen Einlass (114) flüssiges oder festes Druckmaterial (DM) zu erhalten, wobei
- die Kammer (110) einen Auslass (120) aufweist, vorgesehen und eingerichtet zum Auftragen von flüssigem oder verflüssigtem Druckmaterial (DM) auf eine Fläche (F),
- wobei der Auslass (120) einen rotations-asymmetrischen Durchtrittsquerschnitt für das Druckmaterial (DM) hat und Teil einer an der Kammer (110) um eine Mittellängsachse (M) drehbar angeordneten Düse (150) ist, die in Längsrichtung zweigeteilt ist, wobei das der Fläche (F) zugewandte, von der Kammer (110) abliegende Ende drehbar ist, wobei dieses drehbare Ende der Düse (150) einen Düsenkörper (152) hat, der eine der Fläche (F) zugewandte Stirnseite (154) aufweist, die gesteuert werden kann,
um die Mittellängsachse (M) zu rotieren, um die Ausrichtung des Auslasses (120) mit seinem rotations-asymmetrischen Durchtrittsquerschnitt zu verändern und an einen Verfahrweg des 3Druckerkopfes (100) anzupassen, **dadurch gekennzeichnet, dass** die Stirnseite (154) rotations-asymmetrisch zu der Mittellängsachse M gestaltet ist.

2. Der 3D-Druckerkopf (100) zum additiven Aufbauen eines Bauteils nach Anspruch 1, wobei
- zum Ausbringen einer variablen Breite eines Streifens des Druckmaterials (DM) ein in der Draufsicht breiter Bereich des Druckerzeugnisses aufzubauen ist, indem der Durchtrittsquerschnitt oval ist und die große Halbachse des ovalen Durchtrittsquerschnitts quer zur Verfahrrichtung des 3D-Druckerkopf (100) ausgerichtet ist, und ein in der Draufsicht schmaler Bereich des Druckerzeugnisses aufzubauen ist, indem die große Halbachse des ovalen Durchtrittsquerschnitt längs zur Verfahrrichtung des 3D-Druckerkopf (100) ausgerichtet ist.

3. Der 3D-Druckerkopf (100) zum additiven Aufbauen eines Bauteils nach Anspruch 1, wobei
- der Düsenkörper (152) mittels eines durch eine Steuerung (250) betriebenen Motors (160) mit einem Ritzel (162), das mit einem Zahnkranz (164) kämmt, gesteuert um die Mittellängsachse (M) zu rotieren ist.

4. Der 3D-Druckerkopf (100) zum additiven Aufbauen eines Bauteils nach Anspruch 1, wobei
- der Düsenkörper (152) mit seiner rotations-asymmetrischen Stirnseite (154) beheizt ist, so dass die Stirnseite 154 als Einrichtung (200) zum Wärmeeintrag in einen Verschweißungsbereich (VB) der Fläche (F) in einer Umgebung des Auslasses (120) vor/während/nach dem Auftragen des Druckmaterials (DM) wirkt.

5. Der 3D-Druckerkopf (100) nach Anspruch 1, wobei der Auslass (120) an einer Seite des 3D-Druckerkopfes angeordnet ist, die zu einer das aufzubauende Bauteil tragenden Fläche (F) hin gerichtet ist zum Auslass des Druckmaterials (DM) aus dem 3D-Druckerkopf dient, und/oder wobei für die Verarbeitung thermoplastischen Kunststoffmaterials die Kammer (110) eine Heizeinrichtung (138) aufweist, die dazu vorgesehen und eingerichtet ist, das thermoplastische Kunststoffmaterials auf seine Schmelztemperatur zu erwärmen.

6. Der 3D-Druckerkopf (100) nach Anspruch 5, wobei die Einrichtung zum Wärmeeintrag relativ zu dem Auslass (120) so angeordnet ist, dass sie in dem Verschweißungsbereich der Fläche (F) zusätzliche Wärme zuführt um in dem Verschweißungsbereich (VB) die Fläche (F) derart zu erwärmen, dass die Fläche (F), zumindest an ihrer Oberfläche erweicht und sich mit dem neu aufzutragendem Druckmaterial (DM) verbindet.

7. Der 3D-Druckerkopf (100) nach einem der vorhergehenden Ansprüche, wobei eine Einrichtung (400) zum Kühlen relativ zu dem Auslass (120) so angeordnet ist und eingerichtet ist, dass sie das aufgetragene Kunststoffmaterial nach dem Auftragen zusammen mit dem bereits ausgebrachten Kunststoffmaterial abkühlt.

8. Der 3D-Druckerkopf (100) nach einem der vorhergehenden Ansprüche, wobei die Einrichtung zum Wärmeeintrag durch eine Steuerung (250) so zu steuern ist,
- dass der Wärmeeintrag so zu bemessen ist, dass im Bereich des Aufeinandertreffens des neu aufzubringenden Kunststoffmaterial auf die Fläche (F) diese kurzzeitig zumindest weich oder flüssig ist, oder
- abhängig von einer Verfahrgeschwindigkeit des 3D-Druckerkopfes (100) relativ zu der Fläche (F) der Wärmeeintrag so zu bemessen ist, dass jeweils ein Bereich von etwa 2 - 5 mm in der Umgebung des Auslasses (120) erweicht / verflüssigt ist, oder
- abhängig von einer Durchtrittsfläche des Auslasses (120) und dessen Abstandes (A) von der Fläche (F) der Wärmeeintrag so zu bemessen ist, dass jeweils ein Bereich von etwa dem 2 - 10-fachen der Durchtrittsfläche des Auslasses aus in der Umgebung des Auslasses (120) erweicht / verflüssigt ist, oder
- dass der Wärmeeintrag nur in dem Bereich erfolgt, der momentan von dem Auslass (120) überfahren wird.

9. Der 3D-Druckerkopf (100) nach einem der vorhergehenden Ansprüche, wobei eine Einrichtung (500) zum berührenden oder berührungslosen Erfassen der Temperatur der Fläche (F) im Bereich der Umgebung des Auslasses (120) vor und/oder nach dem neu aufzubringenden Kunststoffmaterial vorgesehen ist.

10. Der 3D-Druckerkopf (100) nach einem der vorhergehenden Ansprüche, wobei die Einrichtung zum Wärmeeintrag und/oder die Einrichtung (300) zum Kühlen dazu eingerichtet sind, die Fläche berührend oder berührungslos zu erwärmen bzw. zu kühlen, und/oder durch ein oder mehrere Peltierelemente (PE) realisiert sind.

11. Ein 3D-Drucker mit einem 3D-Druckerkopf (100) gemäß einem der vorhergehenden Ansprüche, wobei der 3D-Drucker den 3D-Druckerkopf (100) relativ zu einer ebenen Aufnahme 300 für ein Druckerzeugnis oder Bauteil entlang wenigstens einer oder um eine geometrische Achse (x, y, z; z, Theta) mittels einer Steuerung gesteuert bewegt um ein 3D-Druckerzeugnis zu erhalten.

12. Verfahren zum additiven Herstellen eines Druckerzeugnisses oder Bauteils, mit einem 3D-Druckerkopf (100) nach Anspruch 1, mit den Schritten
- Auftragen von flüssigem oder verflüssigtem Druckmaterial (DM) aus einer Kammer (110) mit einem Auslass (120) auf eine Fläche (F), wobei der Auslass (120) einen ovalen rotations-asymmetrischen Durchtrittsquerschnitt für das Druckmaterial (DM) hat und Teil einer an der Kammer (110) um eine Mittellängsachse (M) drehbar angeordneten Düse (150) ist, die in Längsrichtung zweigeteilt ist, wobei das der Fläche (F) zugewandte, von der Kammer (110) abliegende Ende drehbar ist, wobei dieses drehbare Ende der Düse (150) einen Düsenkörper (152) hat, der eine der Fläche (F) zugewandte Stirnseite (154) aufweist, die rotations-asymmetrisch zu der Mittellängsachse M gestaltet ist und um die Mittellängsachse (M) zu rotieren ist, um die Ausrichtung des Auslasses (120) mit seinem rotations-asymmetrischen Durchtrittsquerschnitt zu verändern und an einen Verfahrweg des 3Druckerkopfes (100) anzupassen, wobei
- zum Ausbringen einer variablen Breite eines Streifens des Druckmaterials (DM) ein in der Draufsicht breiter Bereich des Druckerzeugnisses aufgebaut wird, indem die große Halbachse des ovalen Durchtrittsquerschnitts quer zur Verfahrrichtung des 3D-Druckerkopf (100) ausgerichtet wird, und ein in der Draufsicht schmaler Bereich des Druckerzeugnisses aufzubauen ist, indem die große Halbachse des ovalen Durchtrittsquerschnitt längs zur Verfahrrichtung des 3D-Druckerkopfes (100) ausgerichtet wird.

## Claims

1. A 3D printer head (100) for additively building a component, comprising
- a chamber (110) adapted to receive liquid or solid printing material (DM) through an inlet (114), wherein
- the chamber (110) has an outlet (120) provided and adapted for applying liquid or liquefied printing material (DM) to a surface (F),
- wherein the outlet (120) has a rotationally asymmetrical passage cross-section for the pressure material (DM) and is part of a nozzle (150) rotatably arranged on the chamber (110) about a central longitudinal axis (M), which nozzle (150) is divided in two in the longitudinal direction, the end facing the surface (F) and remote from the chamber (110) being rotatable, this rotatable end of the nozzle (150) having a nozzle body (152) which has an end face (154) facing the surface (F) which can be controlled to rotate about the central longitudinal axis (M) in order to change the orientation of the outlet (120) with its rotationally asymmetrical passage cross-section and to adapt it to a travel path of the 3D printer head (100), **characterized in that** the end face (154) is designed to be rotationally asymmetrical with respect to the central longitudinal axis M.

2. The 3D printer head (100) for additively building a component according to claim 1, wherein
- in order to produce a variable width of a strip of the printing material (DM), a region of the printed product which is wide in plan view is to be constructed in that the passage cross-section is oval and the large semi-axis of the oval passage cross-section is aligned transversely with respect to the direction of travel of the 3D printer head (100), and a region of the printed product which is narrow in plan view is to be constructed in that the large semi-axis of the oval passage cross-section is aligned longitudinally with respect to the direction of travel of the 3D printer head (100).

3. The 3D printer head (100) for additively building a component according to claim 1, wherein
- the nozzle body (152) is to be rotated in a controlled manner about the central longitudinal axis (M) by means of a motor (160) operated by a controller (250) and having a pinion (162) meshing with a ring gear (164).

4. The 3D printer head (100) for additively building a component according to claim 1, wherein
- the nozzle body (152) is heated with its rotationally asymmetric face (154) such that the face 154 acts as a means (200) for applying heat to a welding area (VB) of the surface (F) in a vicinity of the outlet (120) before/during/after the application of the printing material (DM).

5. The 3D printer head (100) according to claim 1, wherein the outlet (120) is arranged on a side of the 3D printer head facing a surface (F) supporting the component to be built for discharging the printing material (DM) from the 3D printer head, and/or wherein for processing thermoplastic material the chamber (110) comprises heating means (138) provided and arranged for heating the thermoplastic - material to its melting temperature.

6. The 3D printer head (100) according to claim 5, wherein the heat input means is arranged relative to the outlet (120) such that it supplies additional heat to the surface (F) in the fusion area in order to heat the surface (F) in the fusion area (VB) in such a way that the surface (F) softens, at least at its surface, and bonds to the new printing material (DM) to be applied.

7. The 3D printer head (100) of any one of the preceding claims, wherein a cooling inlet(400) is located relative to the outlet (120) and arranged to cool the deposited plastic material after deposition together with the already deposited plastic material.

8. The 3D printer head (100) according to one of the preceding claims, wherein the device for heat input is to be controlled by a controller (250) in such a way
- that the heat input is to be dimensioned in such a way that, in the region of the impact of the plastic material to be newly applied on the surface (F), the latter is at least soft or liquid for a short time, or
- depending on a travel speed of the 3D printer head (100) relative to the surface (F), the heat input is to be dimensioned in such a way, that in each case a region of about 2 - 5 mm in the vicinity of the outlet (120) is softened / liquefied, or
- depending on a passage area of the outlet (120) and its distance (A) from the surface (F), the heat input is to be dimensioned in such a way that in each case a region of about 2 - 10 times the passage area of the outlet is softened / liquefied in the vicinity of the outlet (120), or-
that the heat input takes place only in the region which is currently traversed by the outlet (120).

9. The 3D printer head (100) according to any one of the preceding claims, wherein a device (500) is provided for contact or non-contact sensing of the temperature of the surface (F) in the area surrounding the outlet (120) before and/or after the new plastic material to be applied.

10. The 3D printer head (100) according to any one of the preceding claims, wherein the device for heat input and/or the device (300) for cooling are arranged to heat or cool the surface in a contacting or non-contacting manner, and/or are implemented by one or more Peltier elements (PE).

11. A 3D printer comprising a 3D printer head (100) according to any of the preceding claims, wherein the 3D printer moves the 3D printer head (100) relative to a planar receptacle (300) for a printed product or component along or about a - geometric axis (x, y, z; z, theta) under control of a controller to obtain a 3D printed product.

12. A method for additively producing a printed product or component, with a 3D printer head (100) according to claim 1, comprising the steps of
- applying liquid or liquefied printing material (DM) from a chamber (110) having an outlet (120) to a surface (F), the outlet (120) having an oval rotationally asymmetrical passage cross-section for the printing material (DM) and being part of a nozzle (150) which is arranged on the chamber (110) such that it can rotate about a central longitudinal axis (M) and which is divided in two in the longitudinal direction, the end facing the surface (F) and remote from the chamber (110) being rotatable, wherein said rotatable end of the nozzle (150) has a nozzle body (152) having a face (154) - facing the surface (F), said face (154) being rotationally asymmetric with respect to the central longitudinal axis (M) and being rotatable about the central longitudinal axis (M) to change the orientation of the outlet (120) with its rotationally asymmetric passage cross-section and to adapt it to a travel path of the 3D printer head (100), whereby
- in order to output a variable width of a strip of the printing material (DM), a region of the printed product which is wide in the plan view is built up by aligning the large semi-axis of the oval passage cross-section transversely with respect to the direction of travel of the 3D printer head (100), and a region of the printed product which is narrow in the plan view is to be built up by aligning the large semi-axis of the oval passage cross-section longitudinally with respect to the direction of travel of the 3D printer head (100).

## Revendications

1. Une tête d'imprimante 3D (100) pour construire de manière additive un composant, comprenant- une chambre (110) adaptée pour recevoir un matériau d'impression liquide ou solide (DM) à travers une entrée (114), dans laquelle
- la chambre (110) a une sortie (120) prévue et adaptée pour appliquer un matériau d'impression liquide ou liquéfié (DM) sur une surface (F),
- dans lequel la sortie (120) a une section transversale de passage asymétrique en rotation pour le matériau sous pression (DM) et fait partie d'une buse (150) disposée de manière rotative sur la chambre (110) autour d'un axe longitudinal central (M), laquelle buse (150) est divisée en deux dans la direction longitudinale, l'extrémité - faisant face à la surface (F) et éloignée de la chambre (110) étant rotative, cette extrémité rotative de la buse (150) ayant un corps de buse (152) qui présente une face frontale (154) tournée vers la surface (F), laquelle face frontale (154) peut être commandée pour tourner autour de l'axe longitudinal central (M) afin de modifier l'orientation de la sortie (120) avec sa section transversale de passage asymétrique en rotation et de l'adapter à un trajet de déplacement de la tête d'imprimante 3D (100), **caractérisé en ce que** la face frontale (154) est conçue pour être asymétrique en rotation par rapport à l'axe longitudinal central (M).

2. La tête d'imprimante 3D (100) pour la construction additive d'un composant selon la revendication 1, dans laquelle
- afin de produire une largeur variable d'une bande du matériau d'impression (DM), une région du produit imprimé qui est large en vue de dessus doit être construite en ce que la section transversale de passage est ovale et le grand demi-axe de la section transversale de passage ovale est aligné transversalement par rapport à la direction de déplacement de la tête d'imprimante 3D (100), et une région du produit imprimé qui est étroite en vue de dessus doit être construite en ce que le grand demi-axe de la section transversale de passage ovale est aligné longitudinalement par rapport à la direction de déplacement de la tête d'imprimante 3D (100).

3. La tête d'imprimante 3D (100) pour la fabrication additive d'un composant selon la revendication 1, dans laquelle
- le corps de buse (152) doit être tourné de manière contrôlée autour de l'axe longitudinal central (M) au moyen d'un moteur (160) actionné par un contrôleur (250) avec un pignon (162) s'engrenant avec une couronne (164).

4. La tête d'imprimante 3D (100) pour la construction additive d'un composant selon la revendication 1, dans laquelle
- le corps de buse (152) est chauffé avec sa face asymétrique en rotation (154) de sorte que la face 154 agit comme un moyen (200) pour appliquer de la chaleur à une zone de soudage (VB) de la surface (F) à proximité de la sortie (120) avant/pendant/après l'application du matériau d'impression (DM).

5. La tête d'imprimante 3D (100) selon la revendication 1, dans laquelle la sortie (120) est disposée sur un côté de la tête d'imprimante 3D faisant face à une surface (F) supportant le composant à construire pour décharger le matériau d'impression (DM) de la tête d'imprimante 3D, et/ou dans laquelle pour traiter le matériau thermoplastique, la chambre (110) comprend des moyens de chauffage (138) prévus et disposés pour chauffer le matériau thermoplastique à sa température de fusion.

6. La tête d'impression 3D (100) selon la revendication 5, dans laquelle le moyen d'apport de chaleur est disposé par rapport à la sortie (120) de manière à fournir de la chaleur supplémentaire à la surface (F) dans la zone de fusion afin de chauffer la surface (F) dans la zone de fusion (VB) de manière à ce que la surface (F) se ramollisse, au moins sur sa surface, et se lie au nouveau matériau d'impression (DM) à déposer.

7. La tête d'imprimante 3D (100) selon l'une quelconque des revendications précédentes, dans laquelle une entrée (400) pour le refroidissement est agencée par rapport à la sortie (120) et agencée pour refroidir la matière plastique déposée après le dépôt conjointement avec la matière plastique déjà déposée.

8. La tête d'impression 3D (100) selon l'une des revendications précédentes, dans laquelle le dispositif d'apport de chaleur doit être commandé par un contrôleur (250) de telle sorte
- que l'apport de chaleur soit dimensionné de telle sorte que, dans la zone de l'impact de la plastique à appliquer nouvellement sur la surface (F), celle-ci soit au moins molle ou liquide pendant un court moment, ou
- en fonction d'une vitesse de déplacement de la tête d'impression 3D (100) par rapport à la surface (F), l'apport de chaleur soit dimensionné de telle sorte que chaque fois une zone d'environ 2 - 5 mm à proximité de la sortie (120) est ramollie / liquéfiée, ou
- en fonction d'une surface de passage de la sortie (120) et de sa distance (A) par rapport à la surface (F), l'apport de chaleur doit être dimensionné de telle sorte que chaque fois une zone d'environ 2 - 10 fois la surface de passage de la sortie est ramollie / liquéfiée à proximité de la sortie (120), ou
- que l'apport de chaleur a lieu uniquement dans la zone qui est actuellement - traversée par la sortie (120).

9. La tête d'imprimante 3D (100) selon l'une quelconque des revendications précédentes, dans laquelle un dispositif (500) est prévu pour détecter par contact ou sans contact la température de la surface (F) dans la région entourant la sortie (120) avant et/ou après la nouvelle matière plastique à appliquer.

10. La tête d'imprimante 3D (100) selon l'une quelconque des revendications précédentes, dans laquelle le dispositif d'apport de chaleur et/ou le dispositif (300) de refroidissement sont agencés pour chauffer ou refroidir la surface par contact ou sans contact, et/ou sont réalisés par un ou plusieurs éléments Peltier (PE).

11. Une imprimante 3D comprenant une tête d'impression 3D (100) selon l'une quelconque des revendications précédentes, dans laquelle l'imprimante 3D déplace la tête d'impression 3D (100) par rapport à un réceptacle plan (300) pour un produit ou composant imprimé le long ou autour d'un axe géométrique (x, y, z ; z, thêta) sous le contrôle d'un contrôleur pour obtenir un produit imprimé 3D.

12. un procédé de production additive d'un produit ou d'un composant imprimé, comprenant une tête d'imprimante 3D (100) selon la revendication 1, comprenant les étapes suivantes
- application d'un matériau d'impression (DM) liquide ou liquéfié à partir d'une chambre (110) présentant une sortie (120) sur une surface (F), la sortie (120) présentant une section transversale de passage ovale asymétrique en rotation pour le matériau d'impression (DM) et faisant partie d'une buse (150) qui est disposée sur la chambre (110) de manière à pouvoir tourner autour d'un axe longitudinal central (M) et qui est divisée en deux dans la direction longitudinale, l'extrémité tournée vers la surface (F) et éloignée de la chambre (110) pouvant tourner, dans lequel ladite extrémité rotative de la buse (150) a un corps de buse (152) ayant une face d'extrémité (154) faisant face à la surface (F), ladite face d'extrémité (154) étant asymétrique en rotation par rapport à l'axe longitudinal central M et pouvant tourner autour de l'axe longitudinal central (M) pour changer l'orientation de la sortie (120) avec sa section transversale de passage asymétrique en rotation et pour l'adapter à un trajet de déplacement de la tête d'imprimante 3D (100), moyennant quoi
- pour la sortie d'une largeur variable d'une bande du matériau d'impression (DM), une région du produit imprimé qui est large dans la vue en plan est construite en alignant le grand demi-axe de la section transversale de passage ovale transversalement à la direction de déplacement de la tête d'imprimante 3D (100), et une région du produit imprimé qui est étroite dans la vue en plan doit être construite en alignant le grand demi-axe de la section transversale de passage ovale longitudinalement à la direction de déplacement de la tête d'imprimante 3D (100).
